# EUROPEAN PATENT APPLICATION

(11) **EP 4 471 166 A1**
(43) Date of publication of application: **04.12.2024**
(21) Application number: 23766646.6
(22) Date of filing: 28.02.2023
(51) Int. Cl.: C22B 1/14, C21B 11/00, C21B 11/02, C21B 13/00, C22B 1/242, C22B 1/243

(54) **METHOD FOR MANUFACTURING CARBONACEOUS MATERIAL-CONTAINING AGGLOMERATE ORE, AND METHOD FOR MANUFACTURING MOLTEN PIG IRON**

(30) Priority: 07.03.2022 JP 2022034562
(71) Applicant: JFE Steel Corporation, Tokyo 100-0011 (JP)
(72) Inventor: IWAMI Yuji, Tokyo 100-0011 (JP); HIGUCHI Takahide, Tokyo 100-0011 (JP); MURAKAMI Taichi, Sendai-shi, Miyagi 980-8577 (JP); HIGASHI Ryota, Sendai-shi, Miyagi 980-8577 (JP)
(74) Representative: Grünecker Patent- und Rechtsanwälte PartG mbB
(86) International application number: PCT/JP2023/007401
(87) International publication number: WO 2023/171468

(57) **Abstract**

Provided are a method for manufacturing a carbonaceous material-containing agglomerate ore and a method for manufacturing molten pig iron, with which a highly-reducible raw material can be obtained, and the amount of a reducing material used when manufacturing molten pig iron in a countercurrent moving bed can be reduced. The method of the present invention for manufacturing a carbonaceous material-containing agglomerate ore includes:
a step of collecting carbon by bringing a carbon-containing gas that contains carbon monoxide into contact with a porous material; and
an agglomeration step of performing agglomeration by mixing a carbon-containing raw material that contains the carbon collected into an iron-containing raw material.

## Description

### Technical field

The present invention relates to a method for manufacturing a carbonaceous material-containing agglomerate ore and a method for manufacturing molten pig iron in the steel industry.

### Background art

When manufacturing molten pig iron in a countercurrent moving bed, a raw material with a high reducibility is required for the sake of reducing the amount of a reducing material used to reduce an iron-containing raw material. As one of highly-reducible raw materials, there is known a carbonaceous material-containing agglomerate ore characterized in that by containing a carbonaceous material in the agglomerated raw material, the reducibility thereof is improved through
a direct reduction via the carbonaceous material

   C+FeO_{X} → CO₂+FeO_{X-2};

   and
an indirect reduction from inside via CO generated by a solution loss reaction

   C+CO₂ → 2CO

   CO+FeO_{X} → CO₂+FeO_{X-1}.

For example, there have been a number of research and development projects on carbonaceous material-containing agglomerate ores, as shown in the following Patent Literatures 1 to 4.

Disclosed in Patent Literature 1 is a method for manufacturing a carbonaceous material-containing sintered ore by loading into a sintering machine carbonaceous material-containing granulated particles whose cores are coke particles having a particle size of not less than 3 mm together with common raw materials, and then sintering them. Patent Literature 2 discloses a carbonaceous material-containing agglomerate ore that contains an iron-containing raw material, a carbonaceous material, and a binder, and a condition where pores of 0.5 µm or larger are present at a ratio of 10% or lower. Patent Literature 3 discloses a carbonaceous material-containing agglomerate ore prepared by coating a porous ore whose pore diameters are at nanometer levels with a carbonaceous material so that the carbon content is 18% or larger. Patent Literature 4 discloses a method in which an iron-containing raw material and a carbonaceous material are pressurized and molded so as to be agglomerated, using a hydraulic binder and water.

### Citation List

### Patent Literature

Patent Literature 1: JP-A-2015-129353
Patent Literature 2: JP-A-2019-157253
Patent Literature 3: JP-A-2019-007036
Patent Literature 4: JP-A-2014-025135

### Summary of Invention

### Technical Problem

Patent Literatures 1 to 4 disclosing carbonaceous material-containing agglomerate ores have the following problems. That is, in Patent Literature 1, since coke particles of not less than 3 mm are used, a contact area between the coke and iron oxides as well as a contact area between the coke and an atmosphere are limited, which has led to a limited effect of improving reducibility. Further, in Patent Literature 2, the carbonaceous material is a carbon source-containing raw material having a particle size of 0 to 10 mm, which indicates that the agglomerate ore is not necessarily aimed at achieving a particle size condition that brings about a high reducibility. Furthermore, in Patent Literature 3, since the carbonaceous material-containing agglomerate ore is limited to a porous ore, there has been a decreased degree of freedom of raw materials. Furthermore, in Patent Literature 4, the particle size of the carbonaceous material is not specified, which indicates that the method is not aimed at achieving a particle size condition that brings about a high reducibility.

The present invention was made in view of these circumstances. It is an object of the present invention to provide a method for manufacturing a carbonaceous material-containing agglomerate ore and a method for manufacturing molten pig iron, with which a highly-reducible raw material can be obtained, and the amount of a reducing material used when manufacturing molten pig iron in a countercurrent moving bed can be reduced.

### Solution to Problem

The present invention is a method for manufacturing a carbonaceous material-containing agglomerate ore. The method includes:
a step of collecting carbon by bringing a carbon-containing gas that contains carbon monoxide into contact with a porous material; and
an agglomeration step of performing agglomeration by mixing a carbon-containing raw material that contains the carbon collected into an iron-containing raw material.

Here, in the method of the present invention for manufacturing a carbonaceous material-containing agglomerate ore, which is configured as above, the following resolutions are considered as more preferable:
(1) the step of collecting carbon is carried out via a carbon deposition reaction;
(2) the iron-containing raw material includes iron ores and/or dust generated in ironworks;
(3) the carbon-containing raw material includes an iron carbide;
(4) in the agglomeration step, biomass is further mixed into the carbon-containing raw material;
(5) carbon is contained in an amount of 15% by mass or smaller per 1 particle of the carbonaceous material-containing agglomerate ore;
(6) in the agglomeration step, a binder is further mixed into the carbon-containing raw material, and the binder is hardened in a cold state in the agglomeration step;
(7) in the agglomeration step, a cement-based solidifying material is further mixed into the carbon-containing raw material, and the cement-based solidifying material is solidified in the agglomeration step.

Further, the present invention is a method for manufacturing molten pig iron with the carbonaceous material-containing agglomerate ore manufactured by the above method for manufacturing a carbonaceous material-containing agglomerate ore, wherein an iron-containing agglomerate raw material including the carbonaceous material-containing agglomerate ore is loaded from above, and a reducing gas is flowed upward from below, whereby the iron-containing agglomerate raw material acting as a countercurrent moving bed is reduced and melted to manufacture molten pig iron.

Here, in the method of the present invention for manufacturing molten pig iron, which is configured as above, manufacturing the molten pig iron in a shaft furnace is considered as a more preferable resolution.

Further, the present invention is a method for manufacturing molten pig iron with the carbonaceous material-containing agglomerate ore manufactured by the above method for manufacturing a carbonaceous material-containing agglomerate ore, wherein the carbonaceous material-containing agglomerate ore is heated to 1,160 to 1,450°C to be reduced and melted and is then cooled to obtain a reduced iron, and molten pig iron is manufactured by melting the reduced iron.

### Advantageous Effects of Invention

According to the method of the present invention for manufacturing a carbonaceous material-containing agglomerate ore, by using carbon collected from a carbon-containing gas that contains carbon monoxide, the carbon used in the carbonaceous material-containing agglomerate ore is exceedingly small, which leads to a larger contact area with an iron-containing raw material and a gas, thereby obtaining a carbonaceous material-containing agglomerate ore with a reducibility higher than before.

### Brief Description of Drawings

[FIG. 1] is a flowchart illustrating an example of a method of this embodiment for manufacturing a carbonaceous material-containing agglomerate ore.
[FIG.2] is a diagram illustrating processes from steps S 1 to S3 of the method for manufacturing a carbonaceous material-containing agglomerate ore.
[FIG.3] is a diagram illustrating processes from steps S3 to S5 of the method for manufacturing a carbonaceous material-containing agglomerate ore.
[FIG.4] is a diagram illustrating an embodiment of a method of the present invention for manufacturing molten pig iron.
[FIG.5] is a graph showing the impact of a carbon species on the reducibility of an iron ore.
[FIG.6] is a set of photographs in which FIG.6(a) is a SEM photograph of a collected carbon used in the present invention, and FIG.6(b) is an enlarged photograph of a part in FIG.6(a) that is encircled by broken lines.

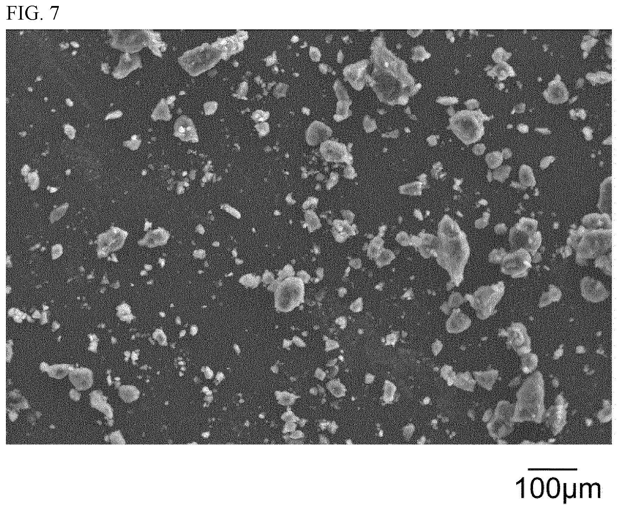

[FIG.7] is a SEM photograph of carbon black used in a comparative example.
[FIG.8] is a diagram showing the reduction degree of the iron ore.

### Description of Embodiments

An embodiment of the present invention is described in detail hereunder. Here, the following embodiment is a set of examples of a device and/or method embodying the technical concept of the present invention and is not to limit the configuration of the present invention to those shown below. That is, various modifications can be made to the technical concept of the present invention within the technical scope described in the claims.

### <Method of the present invention for manufacturing carbonaceous material-containing agglomerate ore>

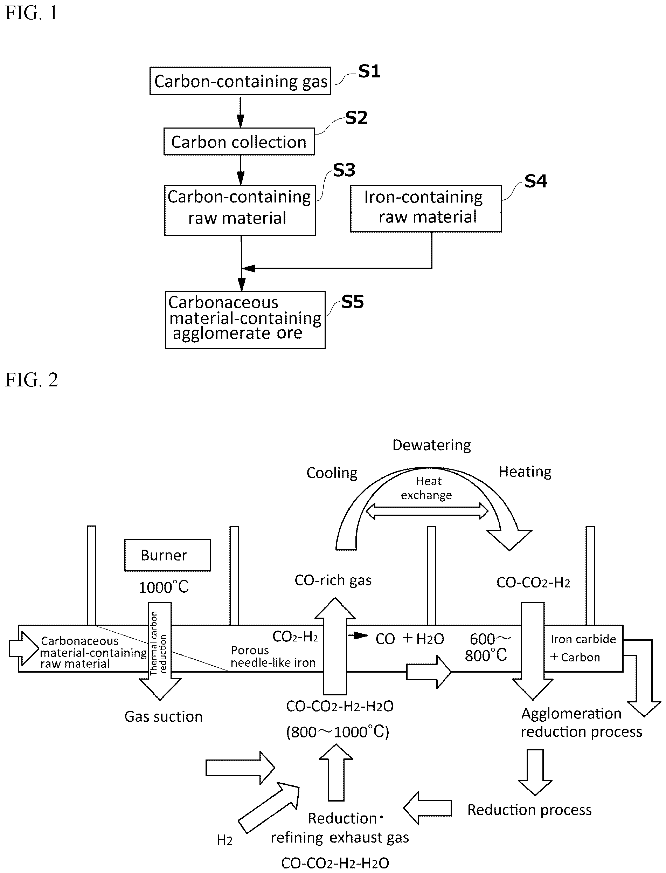

FIG.1 is a flowchart illustrating an example of a method of this embodiment for manufacturing a carbonaceous material-containing agglomerate ore. Described with reference to FIG.1 is an example of the method of the present invention for manufacturing a carbonaceous material-containing agglomerate ore, where at first in a step S1, a carbon-containing gas that contains carbon monoxide is prepared. Next, in a step S2, carbon is collected from the carbon-containing gas that contains carbon monoxide. Next, in a step S3, a carbon-containing raw material that contains the carbon collected is prepared. At the same time, in a step S4, an iron-containing raw material is prepared. Finally, in a step S5, the carbon-containing raw material that contains the carbon collected is mixed into the iron-containing raw material prepared, preferably together with a solidifying material such as a binder and cement, and biomass for agglomeration, thereby obtaining a carbonaceous material-containing agglomerate ore. Here, the step S3 of preparing the carbon-containing raw material that contains the carbon collected can be omitted, and the carbon collected in the step S2 can be directly used in the step S5.

Here, as the carbon-containing gas that contains carbon monoxide in the step S1, there can be used, for example, a blast furnace gas, a converter furnace gas, or a synthetic gas of these gases; or a modified gas prepared by modifying part of the carbon dioxide contained in these gases to carbon monoxide via the water gas shift reaction.

As a method in the step S2 for collecting carbon from the carbon-containing gas that contains carbon monoxide, there may be used a carbon deposition reaction in which carbon is deposited in a porous material by bringing the carbon-containing gas into contact with the porous material, and allowing either a bimolecular decomposition reaction (I) of carbon monoxide or a unimolecular decomposition reaction (II) of carbon monoxide to proceed, the reactions (I) and (II) being respectively expressed by the following chemical reaction formulae (I) and (II).

2CO → C+CO₂... (I)

CO+H₂ → C+H₂O... (II)

In the carbon deposition reaction, for example, a solid carbon is deposited on the surface of the porous material if using a porous material such as a platinum porous material and a Ni porous material, thereby allowing this solid carbon to be collected. Meanwhile, if using an iron porous material, iron will be carburized by part of or all the solid carbon deposited, whereby carbon will be collected as a solid carbon and iron carbide, or as an iron carbide.

If using an iron porous material as the porous material, it is preferred that the solid carbon and iron carbide be treated as the carbon-containing raw material, and that the iron porous material be treated as the iron-containing raw material. In this way, they can be collectively used as the iron-containing raw material and the carbon-containing raw material without separating the porous material and carbon. Here, the carbon collected if using an iron porous material includes the solid carbon deposited on the surface of the porous material and the iron carbide formed via carburization of the iron.

It is preferred that the iron-containing raw material in the step S4 include iron ores and/or dust generated in ironworks.

FIG.2 is a diagram illustrating the processes from the steps S1 to S4 of the method for manufacturing a carbonaceous material-containing agglomerate ore. Shown in FIG.2 is an example where an iron porous material (iron whiskers) is used as the porous material, the solid carbon and iron carbide are used as the carbon-containing raw material, and the iron whiskers are used as the iron-containing raw material.

In FIG.2, the left side represents a porous material formation zone, the central part represents a modification zone, and the right side represents a carbonization zone. In the porous material formation zone, for example, a gas of 1,000°C is sucked from below through a carbonaceous material-containing raw material prepared by mixing a carbonaceous material into an iron powder, whereby the carbonaceous material-containing raw material undergoes thermal carbon reduction to obtain a porous needle-like iron (iron whiskers). In the modification zone, various exhaust gases including carbon dioxide are passed through the iron whiskers while performing heating to 800°C or higher using the gas sucked in the thermal carbon reduction, thereby promoting the water gas shift reaction in which carbon dioxide is modified to carbon monoxide, thus obtaining a carbon monoxide-rich gas. In the carbonization zone, utilizing the atmosphere temperature in the water gas shift reaction, by passing the carbon monoxide-rich gas as the carbon-containing gas through the iron whiskers under an environment of 500 to 800°C, a solid carbon is deposited on the surfaces of the iron whiskers via the carbon deposition reaction (carbonization) to obtain the solid carbon and iron carbide. Next, the solid carbon and iron carbide obtained are subjected to an agglomeration process and reduction process. This process corresponds to S1 to S4 in FIG. 1 illustrating the method for manufacturing a carbonaceous material-containing agglomerate ore.

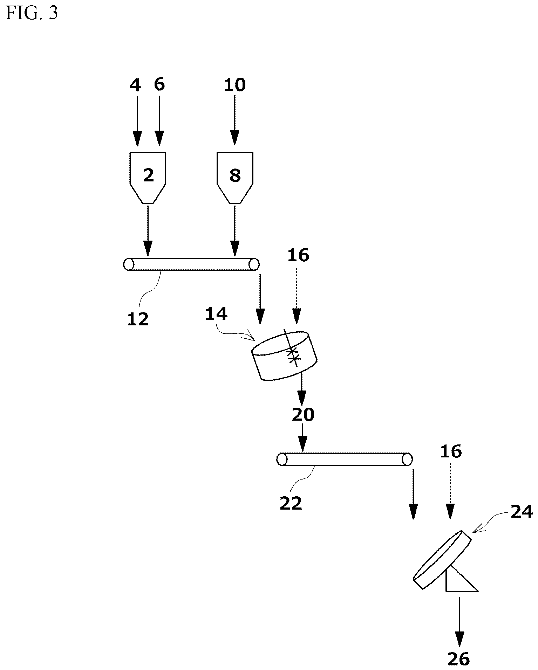

FIG.3 is a diagram illustrating the processes from the steps S3 to S5 of the method for manufacturing a carbonaceous material-containing agglomerate ore. Illustrated in FIG.3 is an example where iron whiskers containing a solid carbon and iron carbide are used as the carbon-containing raw material and iron-containing raw material, and a cement powder is used as the solidifying material. Here, the solidifying material is not limited to a cement powder, but a binder capable of being hardened in a cold state can be used as well.

In the example shown in FIG.3, an iron porous material 4 (iron-containing raw material) that is stored in a storage tank 2, a solid carbon and/or iron carbide 6 (carbon-containing raw material) that is stored in the storage tank 2 and has been collected from the carbon-containing gas that contains carbon monoxide, and a cement powder 10 that is stored in an storage tank 8 are cut out by given amounts and sent to a conveyor 12 from each storage tank. The iron-containing raw material, the carbon-containing raw material, and the cement powder 10 are transported to a kneader14 by the conveyor 12. The iron-containing raw material, carbon-containing raw material, and cement powder 10 that have been transported are mixed with an appropriate amount of water 16 in the kneader 14 to be turned into a mixed powder 20. Next, the mixed powder 20 is transported to a granulator 24 by a conveyor 22 and granulated with an appropriate amount of water 16 in the granulator 24. After being cured for a given period of time to have the cement powder solidified, a carbonaceous material-containing agglomerate ore 26 is obtained. The crushing strength of the carbonaceous material-containing agglomerate ore 26 improves if the amount of the cement powder 10 added is increased. Thus, the amount of the cement powder 10 added with respect to the carbon-containing raw material may be determined according to a required crushing strength of the carbonaceous material-containing agglomerate ore 26. The crushing strength of the carbonaceous material-containing agglomerate ore 26 can be measured by an autograph (1 mm/min).

Here, in the above method for manufacturing a carbonaceous material-containing agglomerate ore, if the carbon content in the carbonaceous material-containing agglomerate ore obtained does not meet a given carbon mass ratio, it is preferred that the given carbon mass ratio be met by adding, for example, biomass to the carbon-containing raw material or the like. Similarly, if the iron-containing raw material does not meet a given iron mass ratio, there may be further added iron ores and dust generated in ironworks. Moreover, when forming a carbonaceous material-containing agglomerate ore, it is preferred that it is formed in a cold state because there is a need to avoid combustion and gasification of the carbon contained therein. As a method for carrying out forming in a cold state, there may be listed, for example, a method in which granulation is performed with a pelletizer and a drum mixer after adding a cement-based solidifying agent or the like, or a method in which compression forming is performed with a briquette machine or the like. Further, for the sake of maintaining a strength after reduction, it is preferred that carbon be contained in an amount of 15% by mass or smaller per 1 particle of the carbonaceous material-containing agglomerate ore. Here, it is not preferable when carbon is contained in an amount of larger than 15% by mass per 1 particle of the carbonaceous material-containing agglomerate ore, because the crushing strength of the carbonaceous material-containing agglomerate ore that is measured by the autograph (1 mm/min) will fall below a threshold value (2.5 MPa).

### <Method for manufacturing molten pig iron with the carbonaceous material-containing agglomerate ore manufactured by the above manufacturing method>

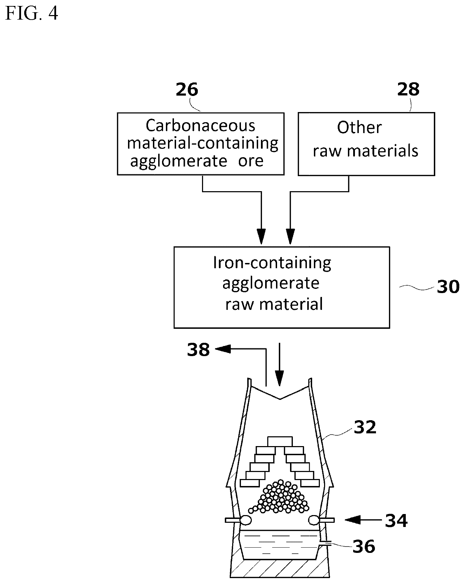

FIG.4 is a diagram illustrating an embodiment of a method of the present invention for manufacturing molten pig iron. As shown in FIG.4, the method of this embodiment for manufacturing molten pig iron is explained via an example where a blast furnace 32 is used as a vertical shaft furnace. Here, there is no vertical shaft furnace for molten pig iron manufacturing that does not use coke. An iron-containing agglomerate raw material 30 including the carbonaceous material-containing agglomerate ore 26 manufactured by the above method for manufacturing a carbonaceous material-containing agglomerate ore and other raw materials 28 is loaded into the blast furnace 32 from above, and a reducing gas 34 is flowed upward from below, whereby the iron-containing agglomerate raw material 30 acting as a countercurrent moving bed is reduced and melted to manufacture a molten pig iron 36. Further, an exhaust gas 38 discharged from the furnace top of the blast furnace 32 via reduction may be included in the carbon-containing gas that contains carbon monoxide, which is a gas used in the method of this embodiment for manufacturing a carbonaceous material-containing agglomerate ore; and a gas obtained by modifying the carbon dioxide contained in such exhaust gas to carbon monoxide via the water gas shift reaction may be included in the carbon-containing gas that contains carbon monoxide. It is preferable to include the exhaust gas 38 in the carbon-containing gas that contains carbon monoxide, because not only the blast furnace exhaust gas can be effectively utilized, but carbon recycling in the molten pig iron manufacturing process can be realized. Here, although the above description is about an example where molten pig iron is manufactured using the blast furnace 32, molten pig iron manufacturing is not limited to such example. For example, molten pig iron may be manufactured by performing a reducing step in which the carbonaceous material-containing agglomerate ore is heated to 1,160 to 1,450°C with a rotary hearth furnace instead of the blast furnace 32 to be reduced and melted and is then cooled to obtain a reduced iron; and a melting step in which molten pig iron is obtained by melting such reduced iron. Even when using a rotary hearth furnace, if the carbonaceous material-containing agglomerate ore is one using the carbon collected, the existing rotary hearth furnace can be used as it is.

### Examples

The impact of the carbon collected on the reducibility of an iron ore was studied. Table 1 shows the ingredient composition of the iron ore used. T. Fe in Table 1 indicates a total iron content. Further, LOI indicates a loss on ignition when heated at 1,000°C for 60 min; in the case of an iron ore, a large portion of the loss is crystal water. The carbon collected was such that as cementite (iron carbide) and a solid carbon, C was in an amount of 38.35% by mass, and the balance was Fe. Further, of all the carbons, C existing as cementite was present at 18.7 mol%, and C existing as the solid carbon was present at 81.3 mol%.

**[Table 1]**

| | Ingredient Composition (mass%) | | | LOI |
|---|---|---|---|---|
| | T. Fe | SiO₂ | Al₂O₃ | mass% |
| Iron ore A | 57.16 | 5.51 | 2.54 | 10.13 |

The particle size of an iron ore A was adjusted to -105 µm. Here, -105 µm refers to the minus sieve of a sieve having an opening of 105 µm. A sample was mixed by stirring a weighed powder of the iron ore A and the carbon collected in a mortar for 3 min without pressing the pestle against the powder. A uniform mixed powder was able to be obtained without changing the particle size of the powder at the time of mixing. Carbon of an amount of 0.8 times the molar quantity of the oxygen in the iron oxide was added to the sample, and carbon of an amount of 0.2 times the molar quantity of the iron in the iron oxide and iron carbide was further added thereto and mixed therewith. By adding carbon of an amount of 0.8 times the molar quantity of the oxygen in the iron oxide, carbon can be used as a reducing material; and by adding carbon of an amount of 0.2 times the molar quantity of the iron in the iron oxide and iron carbide, a carburization effect to the metallic iron can be expected. In this way, carbon was given two roles as a reducing material and as a carburizing material.

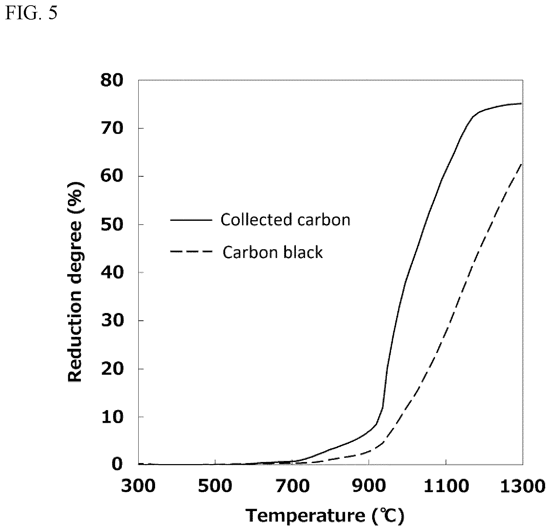

The uniformly mixed sample was subjected to press molding with a pressurizing force of 98 MPa for 30 s and was thus molded into a cylindrical shape having a diameter of 10 mm and a height of 10 mm. The molded sample was then heated to 1,300°C at a heating rate of 10°C/min in an atmosphere where a 5 vol% N₂-Ar mixed gas was supplied at a flow rate of 0.5 NL/min. A gas generated was subjected to gas analysis with an infrared spectrophotometer, and the reduction degree of the iron ore was calculated. The result is shown in FIG.5. As a comparative example, a similar test was conducted using carbon black instead of the carbon collected, and the result of this test is also shown in FIG.5. As is clear from FIG.5, the reducibility of the iron ore A improved when using the carbon collected (continuous line) as compared to when using carbon black (broken line).

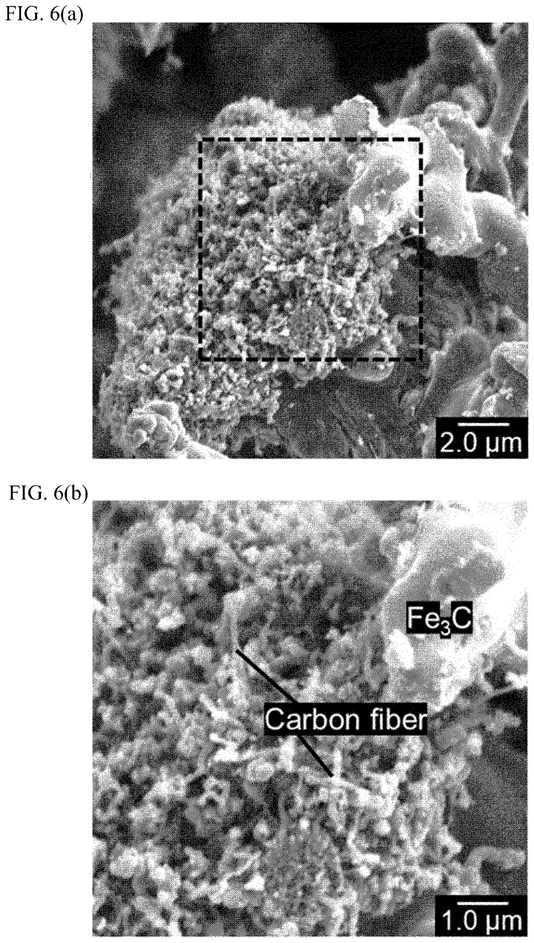

The solid carbon collected was in a fibrous form of about several nm as shown in FIGs.6(a) and 6(b); carbon black was in a form of particles with a particle size of about several tens of µm. In this regard, it is considered that since the solid carbon collected from carbon monoxide is exceedingly small, using such carbon in a carbonaceous material-containing agglomerate ore leads to a larger contact area with the iron-containing raw material and the gas, thereby obtaining a carbonaceous material-containing agglomerate ore with a high reducibility.

Next, the impact of the iron carbide in the carbon collected was studied. There were prepared a collected carbon containing an iron carbide deposited by bringing the carbon-containing gas that contains carbon monoxide into contact with a porous needle-like iron; and, as a comparative example, a collected carbon containing no deposited iron carbide as a result of bringing the carbon-containing gas that contains carbon monoxide into contact with a porous alumina. As for a molar ratio of the carbon in the iron carbide with respect to the total carbon in each case, the collected carbon containing iron carbide exhibited a ratio of 30.9 mol%, whereas the collected carbon containing no iron carbide exhibited a ratio of 0 mol%.

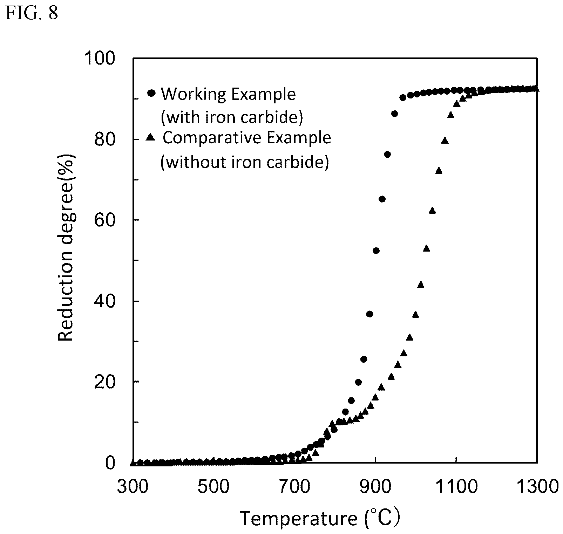

After uniformly mixing each collected carbon with a hematite reagent, the sample was subjected to press molding with a pressurizing force of 98 MPa for 30 s and was thus molded into a cylindrical shape having a diameter of 10 mm and a height of 10 mm. In terms of a mixing ratio between the collected carbon and the hematite reagent, they were mixed so that a molar ratio between C (derived from the collected carbon) in the mixed sample and O (derived from the hematite reagent) therein would be C/O=1.0. The molded sample was then heated to 1,300°C at a heating rate of 10°C/min in an atmosphere where a 5 vol% N₂-Ar mixed gas was supplied at a flow rate of 0.5 NL/min. A gas generated was subjected to gas analysis with an infrared spectrophotometer, and the reduction degree of the iron ore was calculated. The result is shown in FIG.8. As compared to the comparative example, reduction proceeded faster in the working example that contained iron carbide.

### Industrial Applicability

According to the method of the present invention for manufacturing a carbonaceous material-containing agglomerate ore, when manufacturing molten pig iron in a countercurrent moving bed, there can be obtained a highly-reducible raw material capable of reducing the amount of a reducing material used to reduce an iron-containing raw material, whereby a method for manufacturing molten pig iron using such raw material is likewise industrially useful.

### Reference Signs List

- 2, 8: Storage tank
- 4: Porous material
- 6: Solid carbon and/or iron carbide
- 10: Cement powder
- 12,22: Conveyor
- 14: Kneader
- 16: Water
- 20: Mixed powder
- 24: Granulator
- 26: Carbonaceous material-containing agglomerate ore
- 28: Other raw materials
- 30: Iron-containing agglomerate raw material
- 32: Blast furnace
- 34: Reducing gas
- 36: Molten pig iron
- 38: Exhaust gas

## Claims

1. A method for manufacturing a carbonaceous material-containing agglomerate ore, comprising:
a step of collecting carbon by bringing a carbon-containing gas that contains carbon monoxide into contact with a porous material; and
an agglomeration step of performing agglomeration by mixing a carbon-containing raw material that contains the carbon collected into an iron-containing raw material.

2. The method for manufacturing a carbonaceous material-containing agglomerate ore according to claim 1, wherein the step of collecting carbon is carried out via a carbon deposition reaction.

3. The method for manufacturing a carbonaceous material-containing agglomerate ore according to claim 1 or 2, wherein the iron-containing raw material includes iron ores and/or dust generated in ironworks.

4. The method for manufacturing a carbonaceous material-containing agglomerate ore according to any one of claims 1 to 3, wherein the carbon-containing raw material includes an iron carbide.

5. The method for manufacturing a carbonaceous material-containing agglomerate ore according to any one of claims 1 to 4, wherein in the agglomeration step, biomass is further mixed into the carbon-containing raw material.

6. The method for manufacturing a carbonaceous material-containing agglomerate ore according to any one of claims 1 to 5, wherein carbon is contained in an amount of 15% by mass or smaller per 1 particle of the carbonaceous material-containing agglomerate ore.

7. The method for manufacturing a carbonaceous material-containing agglomerate ore according to any one of claims 1 to 6, wherein in the agglomeration step, a binder is further mixed into the carbon-containing raw material, and the binder is hardened in a cold state in the agglomeration step.

8. The method for manufacturing a carbonaceous material-containing agglomerate ore according to any one of claims 1 to 6, wherein in the agglomeration step, a cement-based solidifying material is further mixed into the carbon-containing raw material, and the cement-based solidifying material is solidified in the agglomeration step.

9. A method for manufacturing molten pig iron with the carbonaceous material-containing agglomerate ore manufactured by the method for manufacturing a carbonaceous material-containing agglomerate ore according to any one of claims 1 to 8, wherein an iron-containing agglomerate raw material including the carbonaceous material-containing agglomerate ore is loaded from above, and a reducing gas is flowed upward from below, whereby the iron-containing agglomerate raw material acting as a countercurrent moving bed is reduced and melted to manufacture molten pig iron.

10. The method for manufacturing molten pig iron according to claim 9, wherein the molten pig iron is manufactured in a shaft furnace.

11. A method for manufacturing molten pig iron with the carbonaceous material-containing agglomerate ore manufactured by the method for manufacturing a carbonaceous material-containing agglomerate ore according to any one of claims 1 to 8, wherein the carbonaceous material-containing agglomerate ore is heated to 1,160 to 1,450°C to be reduced and melted and is then cooled to obtain a reduced iron, and molten pig iron is manufactured by melting the reduced iron.
